# EUROPÄISCHE PATENTSCHRIFT

(11) **EP 3 629 066 B1**
(45) Veröffentlichungstag und Bekanntmachung des Hinweises auf die Patenterteilung: **27.01.2021**
(21) Anmeldenummer: 18196451.1
(22) Anmeldetag: 25.09.2018
(51) Int. Cl.: G01V 8/12, G01V 8/20

(54) **OPTISCHER SENSOR**
OPTICAL SENSOR
CAPTEUR OPTIQUE

(43) Veröffentlichungstag der Anmeldung: 01.04.2020
(73) Patentinhaber: Leuze electronic GmbH + Co. KG, 73277 Owen/Teck (DE)
(72) Erfinder: HÖRDERICH, Johann, 82291 Mammendorf (DE); LÖSEL, Christoph, 71336 Waiblingen (DE); HUBERT, Jörg, 85244 Röhrmoos (DE); FELLER, Bernhard, 86316 Friedberg (DE)
(74) Vertreter: Ruckh, Rainer Gerhard

(56) Entgegenhaltungen:
- EP-A2- 1 936 406
- CN-B- 104 091 417
- DE-A1-102009 055 990
- DE-A1-102010 006 397
- DE-U1- 29 724 912

## Beschreibung

Die Erfindung betrifft einen optischen Sensor und ein Verfahren zur Überwachung eines Schutzfelds.

Die Überwachung von Schutzfeldern als insbesondere flächigen Bereichen kann mit optischen Sensoren in Form von Lichtvorhängen oder Flächendistanzsensoren erfolgen.

Lichtvorhänge weisen mehrere Strahlachsen bildende Paare von Lichtstrahlen emittierenden Sendern und Lichtstrahlen empfangenden Empfängern auf, wobei die Komponenten der Strahlachsen zyklisch einzeln nacheinander aktiviert werden um so in einzelnen Scans das Schutzfeld abzutasten.

Die Objektdetektion erfolgt in diesem Fall nach dem Lichtschrankenprinzip, das heißt eine Schutzfeldverletzung entsprechend einem Eindringen dieses Objekts in das Schutzfeld wird durch Unterbrechung wenigstens einer Strahlachse registriert. Bei Registrieren einer Schutzfeldverletzung wird ein Objektfeststellungssignal generiert.

Ein Flächendistanzsensor weist typischerweise einen Distanzsensor mit einem Lichtstrahlen emittierenden Sender und einen Lichtstrahlen empfangenden Empfänger auf. Die Lichtstrahlen des Senders werden periodisch in einem Winkelbereich abgelenkt und tasten so in einzelnen Scans das Schutzfeld ab.

Bei derartigen Flächendistanzsensoren werden für die jeweils aktuellen Ablenkpositionen der Lichtstrahlen die Distanzen eines Objektes zu dem Flächendistanzsensor bestimmt. Wird für eine Distanzmessung ein Distanzwert registriert, der innerhalb des Schutzfeldes liegt, so erfolgt unmittelbar die Generierung einer Objektmeldung. Damit können Objekte innerhalb des Schutzfeldes schnell, das heißt mit geringen Ansprechzeiten detektiert werden.

Derartige optische Sensoren werden insbesondere im Bereich des Personenschutzes eingesetzt. Beispielsweise wird mit dem optischen Sensor das Vorfeld eines Arbeitsgeräts wie zum Beispiel einer Werkzeugmaschine oder einer Presse überwacht. Um Gefährdungen von Personen auszuschließen wird das Arbeitsgerät durch die Generierung eines Objektfeststellungssignals deaktiviert, das heißt abgeschaltet. Dadurch wird gewährleistet, dass eine Person, die in das Vorfeld der Maschine eingreift, keinen Gefährdungen ausgesetzt ist.

Im Vorfeld derartiger Arbeitsgeräte können je nach den Bearbeitungsprozessen, die mit den Arbeitsgeräten durchgeführt werden, kleine Objekte wie zum Beispiel Späne oder Kleinteile in den vom optischen Sensor überwachten Bereich eindringen. Treffen die Sendelichtstrahlen auf derartige innerhalb des Schutzfeldes angeordnete kleine Objekte werden diese als innerhalb des Schutzfelds liegend erkannt, das heißt es wird ein Objektfeststellungssignal generiert, das zum Abschalten des Arbeitsgeräts führt, obwohl keine Person oder ein zu schützendes Objekt in das Schutzfeld eingedrungen ist.

Durch derartige Abschaltvorgänge wird die Verfügbarkeit des Arbeitsgerätes in unerwünschter Weise herabgesetzt.

Die DE 103 13 194 B4 betrifft einen optischen Sensor mit einem Distanzsensorelement bestehend aus einem Sendelichtstrahlen emittierenden Sender und einem Empfangslichtstrahlen empfangenden Empfänger, mit einer Ablenkeinheit, mittels derer die Sendelichtstrahlen periodisch innerhalb eines einen Überwachungsbereich definierenden Winkelbereichs geführt sind, und mit einer Auswerteeinheit zur Auswertung der am Ausgang des Empfängers anstehenden Empfangssignale. Der Winkelbereich ist in eine vorgegebene Anzahl von Winkelsegmenten unterteilt, wobei für jedes Winkelsegment in der Auswerteeinheit aus den Empfangssignalen jeweils wenigstens ein Distanzwert abgeleitet wird. In der Auswerteeinheit sind wenigstens ein Schutzfeld und der Durchmesser eines Referenzobjekts abgespeichert. In der Auswerteeinheit sind winkelabhängige Auslösungsbereiche vorgegeben, deren Größen jeweils dem Ausschnitt des Winkelbereichs entsprechen, über welchen sich das dort am Schutzfeldrand liegende Referenzobjekt erstrecken würde. In der Auswerteeinheit wird nur dann ein Objektfeststellungssignal generiert, wenn in sämtlichen Winkelsegmenten wenigstens eines Auflösungsbereiches innerhalb des Schutzfelds liegende Distanzwerte registriert werden.

Bei diesem optischen Sensor führen nur Objekte mit einer Mindestgröße zur Generierung eines Objektfeststellungssignals, das zum Abschalten eines Arbeitsgerätes oder dergleichen führt, wenn der optische Sensor im Bereich der Sicherheitstechnik eingesetzt wird.

Objekte, die kleiner als die Mindestgröße sind, führen nicht nur Generierung eines Objektfeststellungssignals und damit nicht zum Abschalten eines Arbeitsgeräts.

Probleme treten bei diesem optischen Sensor dann auf, wenn sicherheitskritische Objekte, wie zum Beispiel Finger einer Person, etwa gleiche oder sogar kleinere Abmessungen wie nichtsicherheitskritische Objekte aufweisen.

Die DE 10 2009 055 990 A1 betrifft einen Überwachungssensor zur Überwachung eines wenigstens zweidimensionalen Schutzfeldes mit Überwachungsfeldern, mit wenigstens einer Lichtquelle, vorzugsweise einem Laser und einer bewegbaren, vorzugsweise drehbaren Lichtablenkeinheit zur Ablenkung des Lichtes der Lichtquelle in ein zu überwachendes Schutzfeld. Weiter ist ein Empfänger zur Detektion von Licht vorgesehen, das gegebenenfalls von einem im Schutzfeldvorhandenen Objekt reflektiert oder remittiert wird, und eine Speichereinheit, in der wenigstens zwei Überwachungsfelder abgespeichert sind. Eine Auswerteeinheit ist vorgesehen zur Auswertung der Überwachungsfelder, wobei eine jeweilige Zeitdauer eines erlaubten Verweilens eines Objektes in dem jeweiligen Überwachungsfeld in der Auswerteeinheit einstellbar ist und abhängig von der Zeitdauer des Verweilens, ein Objektfeststellungssignal generierbar ist.

Die DE 10 2010 006 397 A1 betrifft einen photoelektrischen Schalter, zur optischen Abtastung mit einer vom Benutzer einstellbaren Unterdrückungsfunktion, welche eine Funktion des temporären außer Kraftsetzens der sensorischen Erfassung eines Teils oder des gesamten Schutzbereichs ist. Der Schalter ist mit zwei Ausgabesystemen versehen, wobei die Unterdrückungsfunktion in Bezug auf jedes von ihnen einstellbar ist und wobei jeder ihrer Ausgaben ein Inspektionssignal zu unterschiedlichen Zeiten in Zeitteilung überlagert ist.

Die EP 1 936 406 A2 betrifft einen optischen Sensor zur Erfassung von Objekten in einem Überwachungsbereich. Der Sensor umfasst einen Sendelichtstrahlen emittierenden Sender, einen Empfangslichtstrahlen empfangenden Empfänger sowie eine Auswerteeinheit, in welcher in Abhängigkeit der Empfangssignale am Ausgang des Empfängers ein Objektfeststellungssignalgeneriert wird, dessen Signalzustände angeben, ob sich ein Objekt im Überwachungsbereich befindet oder nicht. Im optischen Sensor ist wenigstens ein zusätzliches Sensorelement zur Erfassung des Überwachungsbereichs und/oder eines weiteren Bereichs integriert. Mittels der Signale des zusätzlichen Sensorelements werden Zusatzinformationen über einen Objekteingriff in den Überwachungsbereich gewonnen.

Die DE 297 24 912 U1 betrifft einen opto-elektronischen Sensor mit einem Lichtsender zum Aussenden eines Sendelichtbündels in einen Überwachungsbereich, mit einem Lichtempfänger zum Empfang eines Empfangslichtbündels, das durch das von einem Gegenstand im Überwachungsbereich in Richtung des Lichtempfängers reflektierte Sendelicht gebildet ist, wobei das Empfangslichtbündel in Abhängigkeit vom Abstand des Gegenstandes vom Sensor in einem veränderlichen Strahlwinkel zum Sendelichtbündel steht, und mit einer Steuer- und Auswerteeinheit zur Verarbeitung des Ausgangssignals des Lichtempfängers.

Ein entsprechender Sensor ist aus der CN 104 091 417 B bekannt.

Der Erfindung liegt die Aufgabe zugrunde einen optischen Sensor bereitzustellen, mittels dessen bei hoher Verfügbarkeit eine sichere Objektdetektion erzielt wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Überwachung eines Schutzfelds. Der Sensor weist eine Sende-/Empfangseinheit mit wenigstens einem Lichtstrahlen emittierenden Sender und wenigstens einem Lichtstrahlen empfangenden Empfänger auf, welche dazu ausgebildet sind, mit zeitlich aufeinander folgenden Scans jeweils das Schutzfeld abzutasten. Weiter weist der Sender eine Auswerteeinheit auf, in welcher in Abhängigkeit von Empfangssignalen ein Objektfeststellungssignal generiert wird. Das Schutzfeld ist in Bereiche unterteilt. Ein Objektfeststellungssignal wird dann generiert, wenn in wenigstens zwei zeitlich aufeinanderfolgenden Scans in den Bereichen des Schutzfelds Schutzfeldverletzungen registriert werden. Bei Registrieren einer Schutzfeldverletzung während eines ersten Scans in wenigstens einem der Bereiche des Schutzfeldes bildet dieser einen Ausgangsbereich, von welchem ausgehend ein oder mehrere der Bereiche als Erwartungsbereiche definiert werden, die in enger räumlicher Zuordnung zum Ausgangsbereich sind. Ein Objektfeststellungssignal wird nur dann generiert, wenn in dem folgenden Scan in wenigstens einem dieser Erwartungsbereiche eine Schutzfeldverletzung registriert wird.

Die Erfindung betrifft weiterhin ein entsprechendes Verfahren.

Mit dem erfindungsgemäßen optischen Sensor werden einerseits Objekte in dem zu überwachenden Schutzfeld sicher erkannt. Andererseits können zu detektierende Objekte sicher von Störeinflüssen wie Fremdlichteinstrahlungen oder Störobjekten getrennt werden, sodass diese Störeinflüsse die Objekterfassung nicht beeinflussen.

Da somit mit dem optischen Sensor eine besonders störsichere Objektdetektion gewährleistet ist, kann dieser besonders vorteilhaft als Sicherheitssensor ausgebildet sein und im Bereich der Sicherheitstechnik eingesetzt werden. Hierfür weist der Sicherheitssensor einen fehlersicheren Aufbau auf.

Bei einem Einsatz im Bereich der Sicherheitstechnik dient der optische Sensor insbesondere zur Steuerung einer gefahrbringenden Anlage. Das mit dem optischen Sensor überwachte Schutzfeld ist so dimensioniert und an die Anlage angepasst, dass mit dem optischen Sensor ein Gefahrenbereich an der Anlage überwacht wird. Dringt ein Objekt in das Schutzfeld ein, wird dieses vom optischen Sensor erkannt, das heißt der optische Sensor generiert ein Objektfeststellungssignal. Durch das ausgegebene Objektfeststellungssignal wird die Anlage aus Sicherheitsgründen stillgesetzt. Störobjekte wie schnell umherfliegende Kleinteile oder auch Fremdlichteinstrahlungen führen nicht zu einem unnötigen Stillsetzen der Anlage, da das Registrieren derartiger Störeinflüsse nicht zu einer Generierung eines Objektfeststellungssignals führt.

Eine sichere Objektedetektion wird erfindungsgemäß dadurch erzielt, dass es für die Generierung eines Objektfeststellungssignals nicht ausreicht, dass nur während eines Scans einer Schutzfeldverletzung registriert wird. Vielmehr wird eine Objektverfolgung über wenigstens zwei aufeinanderfolgende Scans durchgeführt, wobei vorteilhaft diese Scans unmittelbar aufeinander folgen.

Hierzu ist das Schutzfeld in einzelne Bereiche unterteilt, wobei bei der Objektverfolgung registriert und bewertet wird, in welchen Bereichen nacheinander Schutzfeldverletzungen registriert werden. Anhand dessen können zu detektierende Objekte sicher von Störeinflüssen unterschieden werden.

Im einfachsten Fall erfolgt die Objektverfolgung über zwei aufeinander folgende Scans. Wird während eines ersten Scans in einem Bereich eine Schutzfeldverletzung registriert, wird dieser als Ausgangsbereich für die Definition von Erwartungsbereichen herangezogen, die in enger räumlicher Zuordnung, insbesondere benachbart, zum Ausgangsbereich sind. Nur wenn dann bei dem zweiten Scan innerhalb eines solchen Erwartungsbereichs eine weitere Schutzfeldverletzung registriert wird, wird ein Objektfeststellungssignal generiert.

Dieses Verfahren kann dahingehend verallgemeinert werden, dass ein Objektfeststellungssignal generiert wird, wenn bei mehr als zwei aufeinanderfolgenden Scans in Bereichen des Schutzfelds Schutzfeldverletzungen registriert werden.

Bei jeder Scanfolge zweier aufeinander folgenden Scans bildet bei Registrieren einer Schutzrechtsverletzung in wenigstens einem Bereich des Schutzfelds während eines ersten Scans dieser einen Ausgangsbereich, von welchem ausgehend ein oder mehrere Bereiche als Erwartungsbereich definiert werden. Voraussetzung für die Generierung eines Objektfeststellungssignals ist eine Registrierung einer Schutzfeldverletzung in wenigstens einem dieser Erwartungsbereiche.

Die Erwartungsbereiche sind dabei an die möglichen Bewegungen zu detektierender Objekte angepasst. Insbesondere wird dabei berücksichtigt, dass sich zu erfassende Objekte, insbesondere Personen oder Körperteile von Personen, kontinuierlich durch das Schutzfeld bewegen. Schutzfeldverletzungen an völlig unterschiedlichen Orten während zweier aufeinanderfolgender Scans können damit nicht von einem Objekteingriff stammen, sondern beruhen auf Störeinflüssen.

Dementsprechend bilden für aufeinanderfolgende Scans definierte Erwartungsbereiche mögliche Migrationsstrukturen von Objekten im Schutzfeld nach, anhand derer diese Objekte sicher erfasst werden können.

Vorteilhaft sind die Erwartungsbereiche abhängig von Geschwindigkeiten zu detektierender Objekte gewählt.

Des Weiteren vorteilhaft sind die Erwartungsbereiche abhängig von der Bewegungsrichtung der zu detektierenden Objekte gewählt, wobei diese z.B. aus vorherigen Scans bestimmt werden kann.

Insbesondere sind die Erwartungsbereiche an eine maximale Objektgeschwindigkeit angepasst.

Dabei kann insbesondere die Relativgeschwindigkeit eines Objekts zum optischen Sensor berücksichtigt werden, sodass auch die Geschwindigkeit des optischen Sensors miteinbezogen ist.

Mit dem erfindungsgemäßen optischen Sensor können generell Störungen, insbesondere auch Fremdlichteinflüsse sicher eliminiert werden.

Fremdlichteinflüsse können beispielsweise durch gegenseitige Beeinflussungen wie zum Beispiel Lichteinstrahlungen von benachbarten, gleichartigen optischen Sensoren bedingt sein.

Im einfachsten Fall werden Fremdlichteinflüsse erfasst, das heißt bereits bei einem Scan erkannt, beispielsweise dadurch, dass das Fremdlicht eine von den Kodierungen der Lichtstrahlen des optischen Sensors unterschiedliche Kodierung aufweist.

Weiterhin können Schutzfeldverletzungen durch Fremdlichteinwirkungen auch mit der erfindungsgemäßen Objektdetektion sicher erfasst werden, da bei der erfindungsgemäßen Auswertung von mehreren Scans das Fremdlicht zufällig auftritt und daher außerhalb der für die Scans definierten Erwartungsbereiche auftritt.

Gemäß einer ersten Ausgestaltung ist der optische Sensor als Lichtvorhang ausgebildet.

Dabei weist der Lichtvorhang mehrere Strahlachsen bildende Paare von Sendern und Empfängern auf, welche einzeln zyklisch nacheinander aktiviert sind, sodass mit den Lichtstrahlen der Sender der Strahlachsen das Schutzfeld in einzelnen Scans nacheinander abgetastet wird.

Der Lichtvorhang kann bevorzugt nach dem Lichtschrankenprinzip arbeiten. In diesem Fall sind die Sender des Lichtvorhangs an einem Rand des Schutzfelds angeordnet, während die Empfänger des Lichtvorhangs am gegenüberliegenden Rand des Schutzfelds angeordnet sind. Bei freiem Schutzfeld werden die Lichtstrahlen der Sender durch das Schutzfeld geführt und gelangen ungehindert zum Empfänger der jeweiligen Strahlachse.

Der Lichtvorhang kann auch nach dem Reflexionslichtschrankenprinzip arbeiten. In diesem Fall sind die Sender und Empfänger eng benachbart an einem Rand des Schutzfelds während am anderen Rand des Schutzfelds ein Reflektor angeordnet ist. Bei freiem Schutzfeld passieren die Lichtstrahlen des Senders einer Strahlachse ein erstes Mal das Schutzfeld, werden dann am Reflektor reflektiert, passieren ein zweites Mal das Schutzfeld und treffen dann auf den Empfänger der jeweiligen Strahlachse.

Bei einem solchen Lichtvorhang bilden eine oder mehrere benachbarte Strahlachsen einen Bereich.

Die Größen derartiger Bereiche können durch Parametrierung eingestellt werden.

Gemäß einer zweiten Ausführungsform ist der optische Sensor ein Flächendistanzsensor, welcher einen Distanzsensor mit einem Sender und Empfänger aufweist. Die Lichtstrahlen des Senders sind dabei periodisch im Schutzfeld geführt.

Je nach Ausführungsart werden die Lichtstrahlen des Senders mit einer Ablenkeinheit abgelenkt oder der Distanzsensor ist in einem rotierenden Messkopf integriert.

Bei einem solchen Flächendistanzsensor sind die Bereiche von Winkel-Distanz-Bereichen gebildet.

Auch die Anzahl und Größen dieser Bereiche können durch Parametrierung vorgegeben werden.

Die Erfindung wird im Folgenden anhand der Zeichnungen erläutert. Es zeigen:
- Figur 1: Ausführungsbeispiel des erfindungsgemäßen optischen Sensors in Form eines Lichtvorhangs.
- Figur 2a - e: Erstes Ausführungsbeispiel einer Objektdetektion mittels des Lichtvorhangs gemäß Figur 1.
- Figur 3a - c: Zweites Ausführungsbeispiel des erfindungsgemäßen optischen Sensors in Form eines Lichtvorhangs.
- Figur 4: Erstes Ausführungsbeispiel eines erfindungsgemäßen optischen Sensors in Form eines Flächendistanzsensors.
- Figur 5: Zweites Ausführungsbeispiel eines erfindungsgemäßen optischen Sensors in Form eines Flächendistanzsensors.
- Figur 6: Beispiel einer Objektdetektion mittels eines Flächendistanzsensors gemäß Figur 3 oder 4.

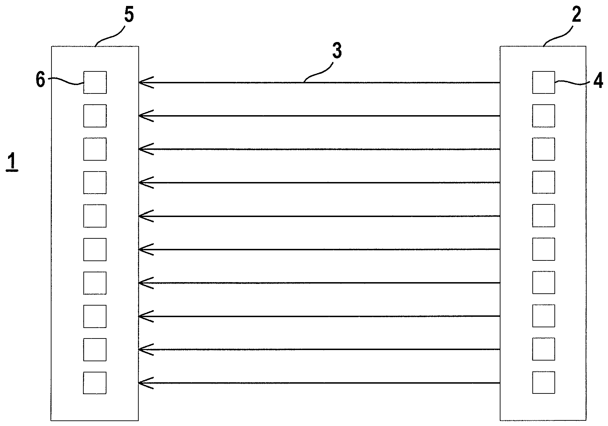

Figur 1 zeigt ein Ausführungsbeispiel des erfindungsgemäßen optischen Sensors in Form eines Lichtvorhangs 1 zur Überwachung eines Schutzfelds.

Der Lichtvorhang 1 weist eine in einem ersten Gehäuse 2 integrierte Sendeeinheit mit einer Anzahl von Lichtstrahlen 3 emittierenden Sendern 4 in Form von Leuchtdioden auf. Der Betrieb der Sender 4 wird von einer nicht dargestellten Steuereinheit gesteuert. Weiterhin weist der Lichtvorhang 1 eine in einem zweiten Gehäuse 5 integrierte Empfängereinheit mit einer der Anzahl von Sendern 4 entsprechenden Anzahl von Empfängern 6 in Form von Photodioden auf. Die Empfangssignale der Empfänger 6 werden in einer nicht dargestellten Auswerteeinheit ausgewertet.

Der Lichtvorhang 1 ist als Sicherheitssensor ausgebildet und weist daher einen fehlersicheren Aufbau auf. Insbesondere weist die Auswerteeinheit einen redundanten Aufbau auf, beispielsweise in Form zweier sich gegenseitig zyklisch überwachender Rechnereinheiten.

Jeweils ein Sender 4 bildet mit dem zugeordneten, gegenüberliegenden Empfänger 6 eine Strahlachse. Die Sender 4 und Empfänger 6 werden in bekannter Weise optisch synchronisiert, sodass die Sender 4 und Empfänger 6 zyklisch einzeln nacheinander aktiviert werden. Damit erfolgt während aufeinanderfolgender Scans jeweils eine Abtastung des Schutzfelds, wobei während jedes Scans alle Strahlachsen nacheinander einmal aktiviert werden.

Figur 1 zeigt den Lichtvorhang 1 bei freiem Schutzfeld. Bei freiem Schutzfeld treffen die Lichtstrahlen 3 aller Sender 4 ungehindert auf die zugeordneten Empfänger 6.

Schutzfeldverletzungen, insbesondere Objekteingriffe, werden generell durch Unterbrechungen von Lichtstrahlen 3 einer oder mehreren Strahlachsen detektiert, wobei hierzu vorteilhaft in der Auswerteeinheit eine Schwellwertbewertung der Empfangssignale der Empfänger 6 durchgeführt wird.

Bei dem erfindungsgemäßen Auswerteverfahren wird generell über mehrere Scans eine Objektverfolgung von Objekten 7 durchgeführt.

Hierzu wird das Schutzfeld in mehrere Bereiche unterteilt. Bei dem Lichtvorhang 1 gemäß Figur 1 bildet jede Strahlachse einen Bereich. Generell können auch mehrere Strahlachsen einen Bereich bilden.

Der optische Sensor generiert allgemein nur dann ein Objektfeststellungssignal, wenn in wenigstens zwei aufeinanderfolgenden Scans Schutzfeldverletzungen in Bereichen des Schutzfelds registriert werden.

Die erfindungsgemäße Objektverfolgung erfolgt dabei derart, dass bei Registrieren einer Schutzfeldverletzung während eines ersten Scans in wenigstens einem Bereich des Schutzfelds dieser Bereich als Ausgangsbereich definiert beziehungsweise markiert wird. Ausgehend von diesem Ausgangsbereich werden dann Erwartungsbereiche definiert, die insbesondere benachbart zum Ausgangsbereich sind.

Nur wenn dann bei den folgenden Scans eine Schutzfeldverletzung in wenigstens einem der Erwartungsbereiche registriert wird, generiert der optische Sensor ein Objektfeststellungssignal, das im Fall eines optischen Sensors in Form eines Sicherheitssensors zum Stillsetzen der Anlage führt.

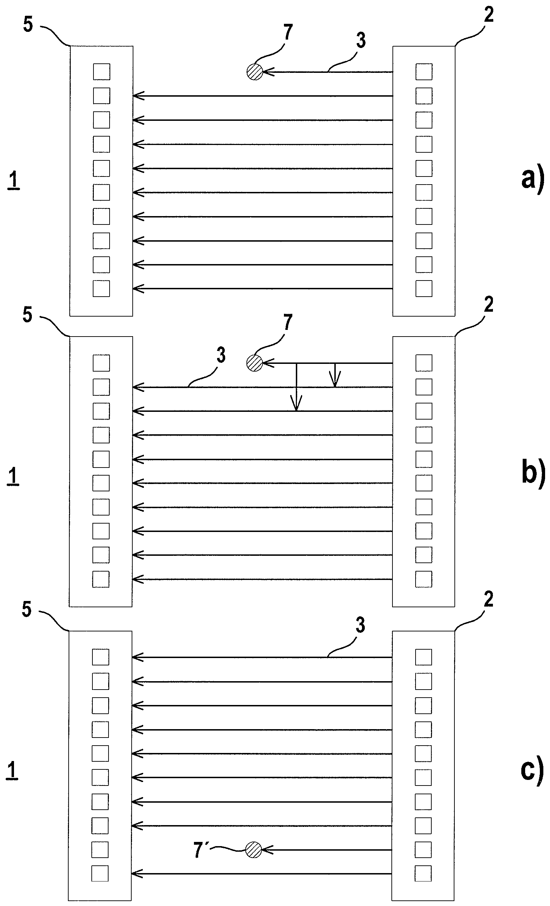

Diese Objektdetektion ist in den Figuren 2a - c beziehungsweise 3a - c veranschaulicht.

Bei dem Beispiel der Figuren 2a - c wird bei einem ersten Scan (Figur 2a) nur für die erste Strahlachse des Lichtvorhangs 1 eine Schutzfeldverletzung bedingt durch einen Eingriff eines Objekts 7 festgestellt. Dementsprechend wird für die erste Strahlachse ein Zähler von 0 auf 1 gesetzt, während die Zähler der weiteren Strahlachsen weiterhin dem Anfangswert 0 annehmen.

Am Ende des ersten Scans wird der Bereich, das heißt die erste Strahlachse für welche die Schutzfeldverletzung registriert wurde, als Ausgangsbereich definiert und markiert. Ausgehend von Ausgangsbereichen werden dann Erwartungsbereiche definiert und markiert. Dies sind im vorliegenden Fall die erste Strahlachse selbst und die angrenzende zweite und dritte Strahlachse. Hierzu werden deren Zählerstände auf 1 gesetzt (Figur 2b).

Voraussetzung für die Generierung eines Objektfeststellungssignals ist, dass im folgenden Scan in wenigstens einem der Erwartungsbereiche durch ein Objekt 7 eine weitere Schutzfeldverletzung registriert wird. Dies ist im vorliegenden Fall nicht gegeben, da, wie Figur 2c zeigt, während des zweiten Scans nur in der verletzten Strahlachse, aber nicht in einem Erwartungsbereich, eine Schutzfeldverletzung registriert wird. Daher generiert der Lichtvorhang 1 in diesem Fall kein Objektfeststellungssignal, das heißt die beiden räumlich nicht korrelierten Schutzfeldverletzungen, die bei dem ersten und zweiten Scan registriert werden, werden als Störungen verworfen.

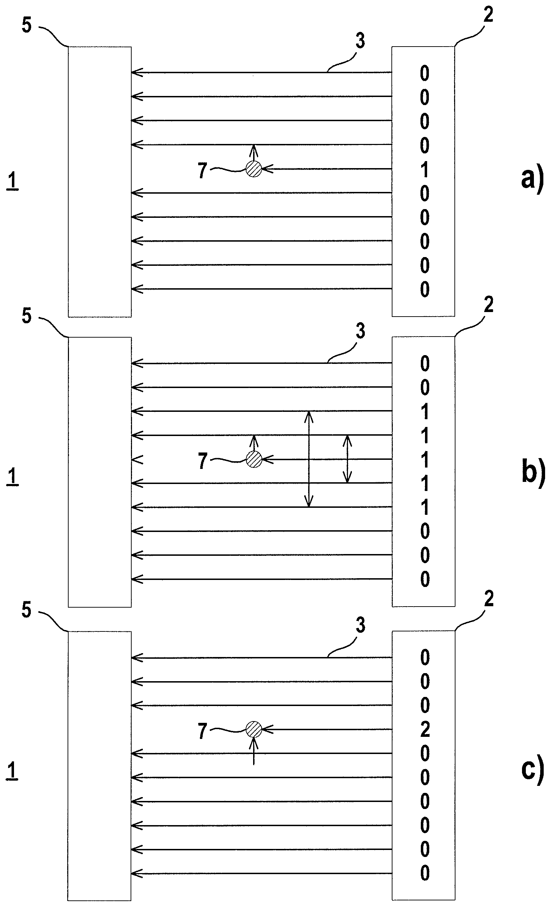

Die Figuren 3a - c zeigen ein Beispiel einer Objektverfolgung eines sich in Pfeilrichtung im Schutzfeld bewegenden Objekts 7 mittels der erfindungsgemäßen Mehrfachscanauswertung.

Beim dem ersten Scan wird das Objekt 7 durch eine Schutzfeldverletzung mit der fünften Strahlachse erfasst, sodass der Zähler dieser Strahlachse auf 1 gesetzt wird, während bei den anderen Strahlachsen der Zählerstand auf dem Ausgangswert 0 verbleibt (Figur 3a).

Nach dem ersten Scan wird der Bereich, in dem die Schutzfeldverletzung registriert wurde, das heißt die fünfte Strahlachse, als Ausgangsbereich zur Definition von Erwartungsbereichen verwendet. Im vorliegenden Fall werden als Erwartungsbereiche die fünfte Strahlachse und die in beiden Richtungen nach oben und unten anschließenden Strahlachsen als Erwartungsbereich definiert, indem deren Zählerstände auf 1 gesetzt werden (Figur 3b).

Voraussetzung für die Generierung eines Objektfeststellungssignals ist, dass im folgenden Scan in wenigstens einem Erwartungsbereich eine Schutzfeldverletzung registriert wird.

Diese Bedingung ist im vorliegenden Fall erfüllt, da sich das Objekt 7 in Pfeilrichtung kontinuierlich durch das Schutzfeld bewegt. Dementsprechend wird beim zweiten Scan das Objekt 7 durch eine Schutzfeldverletzung der vierten Strahlachse registriert, sodass deren Zählerstand auf 2 erhöht wird, wodurch das Objektfeststellungssignal generiert wird, das zum Stillsetzen der Anlage führt.

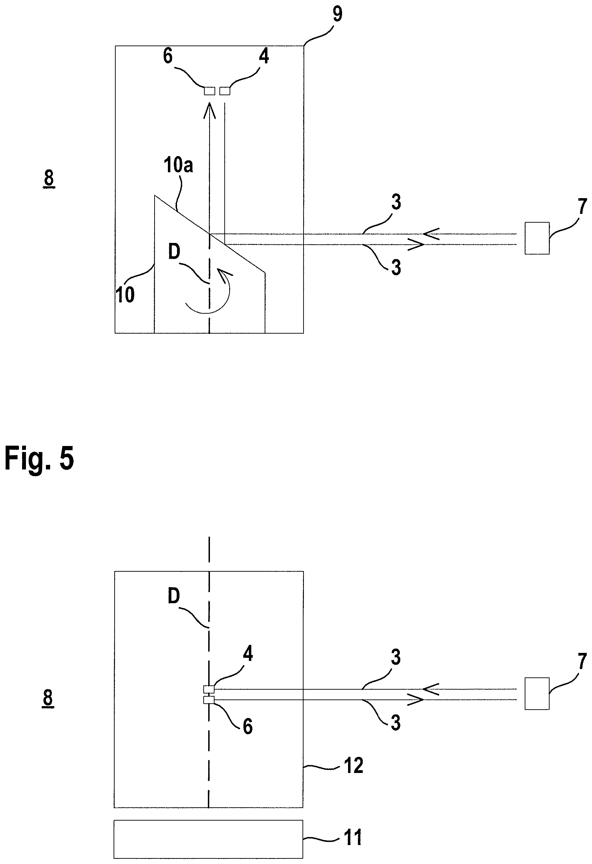

Figur 4 zeigt einen optischen Sensor in Form eines Flächendistanzsensors 8. Der Flächendistanzsensor weist einen in einem Gehäuse 9 stationär angeordneten Distanzsensor mit einem Lichtstrahlen 3 emittierenden Sender 4 und einem Lichtstrahlen 3 empfangenden Empfänger 6 auf. Der Sender 4 ist beispielsweise von einer Laserdiode gebildet, der Empfänger 6 von einer Photodiode. Die Bestimmungen der Distanzen von Objekten 7 erfolgt beispielsweise nach einem Puls-Laufzeit-Verfahren, wobei hierzu der Sender 4 Lichtstrahlen 3 in Form von Lichtpulsen emittiert. Die vom Sender 4 emittierten Lichtstrahlen 3 wie auch die von einem zu detektierenden Objekt 7 zurückreflektierten Lichtstrahlen 3 werden über eine Spiegelfläche 10a einer Ablenkeinheit 10 geführt. Durch die Drehbewegung der motorisch getriebenen Ablenkeinheit 10 um eine Drehachse D werden die Lichtstrahlen 3 in einem Winkelbereich abgelenkt. Durch Ermittlung der Distanzen mit dem Distanzsensor und durch die Ermittlung der aktuellen Ablenkpositionen können Positionen von Objekten 7 insbesondere innerhalb eines Schutzfelds erfasst werden.

Figur 5 zeigt eine Variante des Flächendistanzsensors gemäß Figur 4. Der Flächendistanzsensor gemäß Figur 5 unterscheidet sich vom Flächendistanzsensor gemäß Figur 4 dadurch, dass der Sender 4 und Empfänger 6 des Distanzsensors in einem auf einen Sockel 11 gelagerten, eine Drehachse D drehbaren Messkopf 12 gelagert sind.

Bei den Flächendistanzsensoren der Figuren 4 und 5 wird mit den Lichtstrahlen 3 durch deren Ablenkbewegung ein Schutzfeld mit einer Folge von Scans periodisch abgetastet.

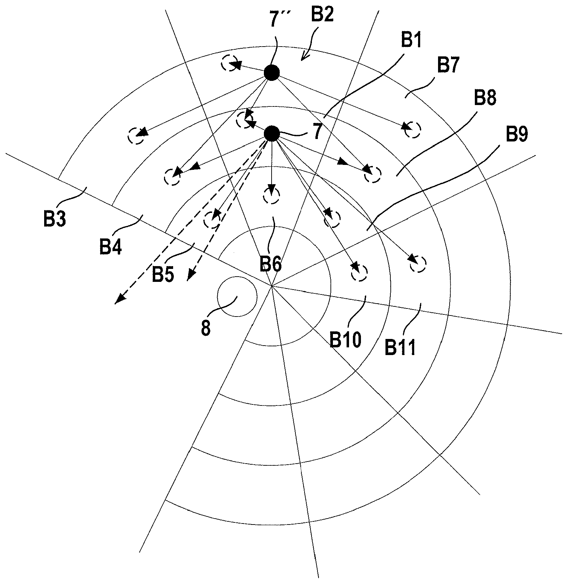

Figur 6 zeigt ein Beispiel der erfindungsgemäßen Objektverfolgung für die Objekterfassung innerhalb eines von einem Flächendistanzsensor gemäß Figur 4 beziehungsweise 5 erfassten Schutzfelds.

Wie Figur 6 zeigt, erstreckt sich das vom Flächendistanzsensor überwachte Schutzfeld über einen Winkelbereich von 270°. Das Schutzfeld ist wieder in mehrere Bereiche, im vorliegenden Fall Winkel-Distanz-Bereich B1, B2, ... BN unterteilt.

Während eines ersten Scans wird mit dem Flächendistanzsensor ein Objekt 7 im Winkel-Distanz-Bereich B1 erfasst. Das direkt dahinter im Winkel-Distanz-Bereich B2 angeordnete Schattenobjekt 7" kann vom Flächendistanzsensor nicht erfasst werden, weil dieses zum Objekt 7 verdeckt ist.

Nach dem ersten Scan wird der Winkel-Distanz-Bereich B1, in den das Objekt 7 erfasst wurde, als Ausgangsbereich definiert. Ausgehend vom Ausgangsbereich werden in Kenntnis der maximal möglichen Objektgeschwindigkeit Erwartungsbereiche definiert. Dies können, ausgehend von einer Objektbewegung des Objekts 7 (wie mit den Pfeilen und gestrichelten Kreisen gekennzeichnet) neben dem Winkel-Distanz-Bereich B1 selbst auch die Winkel-Distanz-Bereich B4 - B6 und B8 - B11 sein. Da davon ausgegangen werden muss, dass sich durch in dem vom Objekt 7 abgedeckten Winkel-Distanz-Bereich B2 ein Schattenobjekt 7" befindet, das sich von dort weiter bewegen kann, werden zusätzlich als Erwartungsbereich die Winkel-Distanz-Bereich B2, B3 und B7 definiert.

Wird dann während des zweiten Scans in wenigstens einem Erwartungsbereich eine Schutzfeldverletzung festgestellt, generiert der Flächendistanzsensor 8 ein Objektfeststellungssignal. Dies ist beispielsweise dann der Fall, wenn sich während des zweiten Scans das Schattenobjekt 7" im Winkel-Distanz-Bereich B7 befindet. Dann wird unabhängig davon, ob das Objekt 7 selbst in einem Erwartungsbereich erfasst wird, das Objektfeststellungssignal generiert.

Leuze electronic GmbH + Co. KG
73277 Owen/Teck

### Bezugszeichenliste

- (1): Lichtvorhang
- (2): Gehäuse
- (3): Lichtstrahlen
- (4): Sender
- (5): Gehäuse
- (6): Empfänger
- (7): Objekt
- (7'): Objekt
- (7"): Schattenobjekt
- (8): Flächendistanzsensor
- (9): Gehäuse
- (10): Ablenkeinheit
- (10a): Spiegelfläche
- (11): Sockel
- (12): Messkopf
- (D): Drehachse
- (B1) - (B11): Winkel-Distanz-Bereich

## Patentansprüche

1. Optischer Sensor zur Überwachung eines Schutzfelds, mit einer Sende-/Empfangseinheit mit wenigstens einem Lichtstrahlen (3) emittierenden Sender (4) und wenigstens einem Lichtstrahlen (3) empfangenden Empfänger (6), welche dazu ausgebildet sind mit zeitlich aufeinander folgenden Scans jeweils das Schutzfeld abzutasten, und mit einer Auswerteeinheit, in welcher in Abhängigkeit von Empfangssignalen ein Objektfeststellungssignal generiert wird, wobei das Schutzfeld in Bereiche unterteilt ist, **dadurch gekennzeichnet, dass** ein Objektfeststellungssignal dann generiert wird, wenn in wenigstens zwei zeitlich aufeinanderfolgenden Scans in den Bereichen des Schutzfelds Schutzfeldverletzungen registriert werden, wobei bei Registrieren einer Schutzfeldverletzung während eines ersten Scans in wenigstens einem der Bereiche des Schutzfelds dieser einen Ausgangsbereich bildet, von welchem ausgehend ein oder mehrere der Bereiche als Erwartungsbereiche definiert werden, die in enger räumlicher Zuordnung zum Ausgangsbereich sind, und wobei ein Objektfeststellungssignal nur dann generiert wird, wenn in dem folgenden Scan in wenigstens einem dieser Erwartungsbereiche eine Schutzfeldverletzung registriert wird.

2. Optischer Sensor nach Anspruch 1, **dadurch gekennzeichnet, dass** ein Objektfeststellungssignal generiert wird, wenn bei mehr als zwei aufeinanderfolgenden Scans in den Bereichen des Schutzfelds Schutzfeldverletzungen registriert werden, wobei bei jeder Scanfolge zweier aufeinanderfolgender Scans bei Registrieren einer Schutzfeldverletzung in wenigstens einem der Bereiche des Schutzfeldes während eines ersten Scans dieser einen Ausgangsbereich bildet, von welchem ausgehend ein oder mehrere der Bereiche als Erwartungsbereiche definiert werden, und als Voraussetzung für die Generierung eines Objektfeststellungssignals eine Registrierung einer Schutzfeldverletzung in wenigstens einem dieser Erwartungsbereiche ist.

3. Optischer Sensor nach einem der Ansprüche 1 oder 2, **dadurch gekennzeichnet, dass** ein Objektfeststellungssignal dann generiert wird, wenn in wenigstens zwei unmittelbar aufeinander folgenden Scans in den Bereichen des Schutzfelds Schutzfeldverletzungen registriert werden.

4. Optischer Sensor nach einem der Ansprüche 1 - 3, **dadurch gekennzeichnet, dass** die Erwartungsbereiche abhängig von Geschwindigkeiten oder Bewegungsrichtungen zu detektierender Objekte gewählt sind.

5. Optischer Sensor nach Anspruch 4, **dadurch gekennzeichnet, dass** die Erwartungsbereiche an eine maximale Objektgeschwindigkeit angepasst sind.

6. Optischer Sensor nach einem der Ansprüche 1 - 5, **dadurch gekennzeichnet, dass** die Anzahl und die Größen von Erwartungsbereichen einstellbar sind.

7. Optischer Sensor nach einem der Ansprüche 1 - 6, **dadurch gekennzeichnet, dass** dieser ein Sicherheitssensor ist.

8. Optischer Sensor nach einem der Ansprüche 1 - 7, **dadurch gekennzeichnet, dass** dieser ein Lichtvorhang (1) ist.

9. Optischer Sensor nach Anspruch 8, **dadurch gekennzeichnet, dass** der Lichtvorhang (1) mehrere Strahlachsen bildende Paare von Sendern (4) und Empfängern (6) aufweist, welche einzeln zyklisch nacheinander aktiviert sind, so dass mit den Lichtstrahlen (3) der Sender (4) der Strahlachsen das Schutzfeld in einzelnen Scans nacheinander abgetastet wird.

10. Optischer Sensor nach Anspruch 9, **dadurch gekennzeichnet, dass** eine oder mehrere benachbarte Strahlachsen einen Bereich bilden.

11. Optischer Sensor nach einem der Ansprüche 1 - 7, **dadurch gekennzeichnet, dass** dieser ein Flächendistanzsensor (8) ist, welcher Distanzsensor mit einem Sender (4) und Empfänger (6) aufweist, wobei die Lichtstrahlen (3) des Senders (4) periodisch im Schutzfeld geführt sind.

12. Optischer Sensor nach Anspruch 11, **dadurch gekennzeichnet, dass** die Lichtstrahlen (3) des Senders (4) mit einer Ablenkeinheit (10) abgelenkt werden oder der Distanzsensor in einem rotierenden Messkopf (12) integriert ist.

13. Optischer Sensor nach einem der Ansprüche 11 oder 12, **dadurch gekennzeichnet, dass** die Bereiche von Winkel- Distanz- Bereichen gebildet sind.

14. Verfahren zur Überwachung eines Schutzfelds mittels eines mit einer Sende-/Empfangseinheit mit wenigstens einem Lichtstrahlen (3) emittierenden Sender (4) und wenigstens einem Lichtstrahlen (3) empfangenden Empfänger (6), welche dazu ausgebildet sind, mit zeitlich aufeinander folgenden Scans jeweils das Schutzfeld abzutasten, und mit einer Auswerteeinheit, in welcher in Abhängigkeit von Empfangssignalen ein Objektfeststellungssignal generiert wird, wobei das Schutzfeld in Bereiche unterteilt ist, **dadurch gekennzeichnet, dass** ein Objektfeststellungssignal dann generiert wird, wenn in wenigstens zwei zeitlich aufeinanderfolgenden Scans in den Bereichen des Schutzfelds Schutzfeldverletzungen registriert werden, wobei bei Registrieren einer Schutzfeldverletzung während eines ersten Scans in wenigstens einem der Bereiche des Schutzfelds dieser einen Ausgangsbereich bildet, von welchem ausgehend ein oder mehrere der Bereiche als Erwartungsbereiche definiert werden, die in enger räumlicher Zuordnung zum Ausgangsbereich sind, und wobei ein Objektfeststellungssignal nur dann generiert wird, wenn in dem folgenden Scan in wenigstens einem dieser Erwartungsbereiche eine Schutzfeldverletzung registriert wird.

## Claims

1. An optical sensor for monitoring a protective field, having a transmitter/receiver unit with at least one transmitter (4) emitting light beams (3) and at least one receiver (6) receiving light beams (3), which are designed to scan the protective field in each case with scans following one another in time, and having an evaluation unit in which an object detection signal is generated as a function of received signals, the protective field being divided into areas, **characterised in that** an object detection signal is then generated, if protective field violations are registered in the areas of the protective field in at least two temporally successive scans, wherein, when a protective field violation is registered during a first scan in at least one of the areas of the protective field, this forms an output area, starting from which one or more of the areas are defined as expectation areas which are in close spatial association with the output area, and wherein an object detection signal is generated only if a protective field violation is registered in at least one of these expectation areas in the following scan.

2. The optical sensor according to claim 1, **characterised in that** an object detection signal is generated when protective field violations are registered in more than two successive scans in the areas of the protective field, wherein for each scan sequence of two successive scans, when a protective field violation is registered in at least one of the areas of the protective field during a first scan, this forms an output area, from which one or more of the areas are defined as expectation areas, and as a prerequisite for the generation of an object detection signal is a registration of a protective field violation in at least one of these expectation areas.

3. The optical sensor according to one of claims 1 or 2, **characterised in that** an object detection signal is generated when protective field violations are - registered in at least two immediately successive scans in the areas of the protective field.

4. The optical sensor according to one of claims 1 to 3, **characterised in that** the expectation ranges are selected depending on speeds or directions of movement of objects to be detected.

5. The optical sensor according to claim 4, **characterised in that** the expectation ranges are adapted to a maximum object speed.

6. The optical sensor according to one of claims 1 to 5, **characterised in that** the number and sizes of expectation ranges are adjustable.

7. The optical sensor according to one of claims 1 to 6, **characterised in that** it is a safety sensor.

8. The optical sensor according to one of claims 1 to 7, **characterised in that** it is a light curtain (1).

9. The optical sensor according to claim 8, **characterised in that** the light curtain (1) has pairs of transmitters (4) and receivers (6) forming several beam axes, which are individually activated cyclically one after the other, so that the protective field is scanned successively in individual scans with the light beams (3) of the transmitters (4) of the beam axes.

10. The optical sensor according to claim 9, **characterised in that** one of the several adjacent beam axes form a region.

11. The optical sensor according to one of claims 1 to 7, **characterised in that** this is a surface distance sensor (8), which has a distance sensor with a transmitter (4) and receiver (6), wherein the light beams (3) of the transmitter (4) are periodically guided in the protective field.

12. The optical sensor according to claim 11, **characterized in that** the light beams (3) of the transmitter (4) are deflected by a deflection unit (10) or the distance sensor is integrated in a rotating measuring head (12).

13. The optical sensor according to one of claims 11 or 12, **characterised in that** the areas are formed by angular-distance areas.

14. A method for monitoring a protective field by means of a receiver (6) receiving light beams (3) and emitting light beams (3) with a transmitter/receiver unit having at least one transmitter (4) emitting light beams (3) and at least one receiver (6) receiving light beams (3), which are designed to scan the protective field in each case with temporally successive scans, and with an evaluation unit in which an object detection signal is generated as a function of received signals, the protective field being divided into areas, **characterized in that** an object detection signal is then generated, if protective field violations are registered in the areas of the protective field in at least two temporally successive scans, wherein, when a protective field violation is registered during a first scan in at least one of the areas of the protective field, this forms an output area, starting from which one or more of the areas are defined as expectation areas which are in close spatial association with the output area, and wherein an object detection signal is generated only if a protective field violation is registered in at least one of these expectation areas in the following scan.

## Revendications

1. Capteur optique pour la surveillance d'un champ de protection, comprenant une unité d'émission/réception avec au moins un émetteur (4) émettant des rayons lumineux (3) et au moins un récepteur (6) recevant des rayons lumineux (3), qui sont conçus pour balayer le champ de protection à chaque fois avec des balayages successifs dans le temps, et avec une unité d'évaluation dans laquelle un signal de détection d'objet est généré en fonction des signaux reçus, le champ de protection étant divisé en zones, **caractérisé en ce qu'**un signal de détection d'objet est ensuite généré, si des violations du champ de protection sont enregistrées dans les zones du champ de protection lors d'au moins deux balayages successifs dans le temps, dans lequel, lorsqu'une violation du champ de protection est enregistrée lors d'un premier balayage dans au moins une des zones du champ de protection, cela forme une zone de sortie, à partir de laquelle une ou plusieurs des zones sont définies comme des zones d'attente qui sont en association spatiale étroite avec la zone de sortie, et dans lequel un signal de détection d'objet est généré uniquement si une violation du champ de protection est enregistrée dans au moins une de ces zones d'attente lors du balayage suivant.

2. Capteur optique selon la revendication 1, **caractérisé en ce qu'**un signal de détection d'objet est généré lorsque, dans le cas de plus de deux balayages successifs, des violations du champ de protection sont enregistrées dans les zones du champ de protection, dans lequel dans chaque séquence de balayage de deux balayages successifs, lorsqu'une violation du champ de protection est enregistrée dans au moins une des zones du champ de protection au cours d'un premier balayage, celle-ci forme une zone de sortie, à partir duquel une ou plusieurs des zones sont définies comme des zones d'attente, et comme condition préalable à la génération d'un signal de détection d'objet est l'enregistrement d'une violation du champ de protection dans au moins une de ces zones d'attente.

3. Capteur optique selon l'une des revendications 1 ou 2, **caractérisé en ce qu'**un signal de détection d'objet est généré lorsque des violations du champ de protection sont enregistrées dans au moins deux balayages directement successifs dans les zones du champ de protection.

4. Capteur optique selon l'une des revendications 1 à 3, **caractérisé en ce que** les plages d'attente sont sélectionnées en fonction des vitesses ou des directions de déplacement des objets à détecter.

5. Capteur optique selon la revendication 4, **caractérisé en ce que** les plages d'attente sont conçues pour une vitesse maximale de l'objet.

6. Capteur optique selon l'une des revendications 1 à 5, **caractérisé en ce que** le nombre et la taille des plages d'attente sont réglables.

7. Capteur optique selon l'une des revendications 1 à 6, **caractérisé en ce qu'**il s'agit d'un capteur de sécurité.

8. Capteur optique selon l'une des revendications 1 à 7, **caractérisé en ce qu'**il s'agit d'un rideau de lumière (1).

9. Capteur optique selon la revendication 8, **caractérisé en ce que** le rideau lumineux (1) comporte des paires d'émetteurs (4) et de récepteurs (6) formant plusieurs axes de faisceau, qui sont activés individuellement de manière cyclique les uns après les autres, de sorte que le champ de protection est balayé successivement en balayages individuels avec les faisceaux lumineux (3) des émetteurs (4) des axes de faisceau.

10. Capteur optique selon la revendication 9, **caractérisé en ce que** l'un des axes de faisceau adjacents forme une région.

11. Capteur optique selon l'une des revendications 1 à 7, **caractérisé en ce qu'**il s'agit d'un capteur de distance de surface (8), qui présente un capteur de distance avec un émetteur (4) et un récepteur (6), les rayons lumineux (3) de l'émetteur (4) étant guidés périodiquement dans le champ de protection.

12. Capteur optique selon la revendication 11, **caractérisé en ce que** les faisceaux lumineux (3) de l'émetteur (4) sont déviés par une unité de déviation (10) ou le capteur de distance est intégré dans une tête de mesure rotative (12).

13. Capteur optique selon l'une des revendications 11 ou 12, **caractérisé en ce que** les zones sont formées par des zones de distance angulaire.

14. Procédé de surveillance d'un champ de protection au moyen d'une unité d'émission/réception avec au moins un émetteur (4) émettant des rayons lumineux (3) et au moins un récepteur (6) recevant des rayons lumineux (3), qui sont conçus pour balayer le champ de protection par des balayages successifs dans le temps, et avec une unité d'évaluation dans laquelle un signal de détection d'objet est généré en fonction des signaux reçus, le champ de protection étant divisé en zones, **caractérisé en ce qu'**un signal de détection d'objet est ensuite généré, si des violations du champ de protection sont enregistrées dans les zones du champ de protection au cours d'au moins deux balayages successifs dans le temps, dans lequel, lors de l'enregistrement d'une violation du champ de protection au cours d'un premier balayage dans au moins une des zones du champ de protection, celle-ci forme une zone de sortie, à partir de laquelle une ou plusieurs des zones sont définies comme des zones d'attente qui sont en association spatiale étroite avec la zone de sortie, et dans lequel un signal de détection d'objet n'est généré que si une violation du champ de protection est enregistrée dans au moins une de ces zones d'attente au cours du balayage suivant.
